# EUROPEAN PATENT SPECIFICATION

(11) **EP 2 690 963 B1**
(45) Date of publication and mention of the grant of the patent: **06.05.2015**
(21) Application number: 12728851.2
(22) Date of filing: 27.03.2012
(51) Int. Cl.: A22C 13/00, C08F 16/06, C08F 8/00

(54) **MODIFIED POLYVINYL ALCOHOL AND A WATER VAPOR- AND SMOKE -PERMEABLE SYNTHETIC CASING FOR FOOD PRODUCTS, COMPRISING IT**
VERÄNDERTER POLYVINYLALKOHOL UND WASSERDAMPF UND RAUCH DURCHLÄSSIGE SYNTHETISCHE VERPACKUNG FÜR NAHRUNGSMITTEL, DIESEN ENTHALTEND
POLY(ALCOOL DE VINYLE) MODIFIÉ ET ENVELOPPE SYNTHÉTIQUE PERMÉABLE À LA VAPEUR D'EAU ET À LA FUMÉE POUR DES PRODUITS ALIMENTAIRES LE COMPRENANT

(30) Priority: 30.03.2011 RU 2011112174
(43) Date of publication of application: 05.02.2014
(73) Proprietor: Obschestvo s ogranichennoi otvetstvennostyu "Proizvodstvenno-kommercheskaya Firma "Atlantis-Pak", Aksayski rayon, Rostovskaya obl., 346703 (RU)
(72) Inventor: BORODAEV, Sergei Vasilievich, Rostov-na-Donu 344041 (RU); GOLYANSKIY, Boris Vladimirovich, Rostov-na-Donu 344029 (RU); RYZENKO, Sergei Petrovich, Rostov-na-Donu 344029 (RU)
(74) Representative: Hoffmann Eitle
(86) International application number: PCT/RU2012/000217
(87) International publication number: WO 2012/134347

(56) References cited:
- EP-A1- 0 692 494
- EP-A2- 0 587 114
- EP-A2- 0 889 068
- EP-A2- 1 188 775

## Description

### Field of Invention

The present invention relates to modified polyvinyl alcohol suitable for melt extrusion and a water vapor- and smoke-permeable synthetic casing comprising such modified polyvinyl alcohol, for food products.

### Background of the Invention

Over the last decade the market of packaging materials has seen the appearance of melt-extruded films based on synthetic polymers, primarily polyamides, permeable to water vapor and smoke and used as casings for smoked sausages and frankfurters.

The application WO 02054878 published on 18.07.2002 discloses films made of a combination of a block copolymer polyamide and a polyether (hereinafter referred to as polyether block amide or PEBA) with polyamides (hereinafter referred to as PA) proposed for use as water vapor- and smoke-permeable casings for sausages subjected to smoking. In a preferable embodiment the casing contains 50-70% of polyamide or polyamide combinations, and 30-50% of PEBA.

Water vapor- and smoke-permeable films made of the same components and, additionally, polyvinyl alcohol (hereinafter referred to as PVA) are described in the application WO 2004103079 published on 02.12.2004. The preferable proportion of the mixture components is as follows: 50-65% PA, 24-26% PEBA and 15-25% PVA.

A smokeable film made of a blend of an ether-ester block copolymer with an aliphatic polyamide contained in a amount from 50 to 99.9% is disclosed in the application WO 02082913 published on 24.10.2002.

The percentage of polyamide in such blends should be predominant; otherwise the films made of them would be too mechanically weak, because of low mechanical strength typical for above block copolymers. The films made of such materials or of blends where they are predominant would not be suitable for use as, e.g., sausage casings, which must withstand high mechanical loads at stuffing. In addition, such block copolymers are rather expensive, that causes pronounced increase of the cost and price of the films containing them in comparison with neat-nylon-based films.

Smoke- and vapor-permeable casings containing polyamides, for instance PA 6, PA 6/66, and hydrophilic compounds, including water soluble polymers, such as polyvinylpyrrolidone or polyvinyl alcohol, which form a highly dispersed phase in the polyamide with the domain linear size (thickness) of 0.1-3.0 µm, as disclosed in the patent RU Nº2182107, published on 10.05.2002 are well known. Such casings are suitable for making sausage products, including frankfurters, providing attainment of a marked smoked appearance and typical smoked dense skin during smoking process. It was further found that such water vapor- and smoke-permeable films have a low adhesion to sausage meat and good peeling characteristics, even capability to be peeled on automatic equipment. However, the presence of two polymer phases with different refraction indices in such films is the cause of their optical heterogeneity manifested by haziness of dry films. When such film becomes wet, for instance, as a consequence of boiling of a sausage product, the above optical heterogeneity is revealed as a strong opalescence (the so-called pearl effect), which often leads to total opacity of the casing. The films made of a blend of a (co)polyamide with polyvinyl alcohol (PVA) are characterized by cavities of size mostly 0.5 - 2.5 µm in the direction perpendicular to the film plane, clearly visible on photos of the film microcuts made by means of a transmission electron microscope. These cavities appear in sites where the highly dispersed PVA phase has been washed away during preparing the microcuts. The films made of a blend of a (co)polyamide with polyvinylpyrrolidone (PVP), which have significantly smaller (finer) PVP phase domains, are not characterized by haziness and opalescence. However, such films are inferior to the films made of a blend of PA and PVA, in terms of vapor permeability and smokeability.

Meanwhile, the ability to see and assess the contents of a packaging is important for both the end consumer, and the manufacturer.

An object of this invention is enhancing of the transparency level of casings made of a blend of polyamide and polyvinyl alcohol, and reduction of their opalescence, in other words an improvement of their optical properties with maintenance of their water vapor- and smoke-permeability, low adhesion to the meat emulsion, and the ability to be easily peeled off a sausage/frankfurter product, even on automatic equipment.

Because tests of a great number of various commercial PVA grades, prepared by conventional process of polyvinyl acetate controlled hydrolysis (alcoholysis), had failed in the attainment of the desirable result, a chemical modification of commercial PVA was investigated as a possible way to it.

Modified PVA obtained through introduction of various functional groups into PVA macromolecules has been described. The disclosed methods comprised the use of such expensive and toxic organic solvents as dimethylsulfoxide (patent application US Nº20090247698 published on 01.10.2009), dimethylformamide (US patents Nº5972375 published on 26.10.1999, and US Nº5036137, published on 30.07.1991) and/or great amounts of water.

This solvent-based technique makes the process for making solid modified PVA too time-consuming and costly, since the solvents must be removed from the resulting modified polyvinyl alcohol.

Modified PVA obtained through surface treatment of the PVA finished products, e.g., films or fibers to impart the desired properties to them, has been also disclosed in US Patent Application Nº2007200967, published on 30.08.2007 and US Patent Nº6610107, published on 26.08.2003 correspondently.

Modified PVA obtained through an action of Cu (II) oxides or hydroides in an alkaline medium on the PVA macromolecule with formation of polyenols has been disclosed in US patent Nº3459724, published on 05.08.1969.

This method is difficult to use if modified PVA must be prepared in the form of a dry product.

The closest to present invention technical solution, disclosed in US Patent Nº3859269, published on 07.01.1975, is modified polyvinyl alcohol obtained by reaction of commercial PVA with hydrogen peroxide in diluted aqueous solution and in the presence of copper ions as a catalyst at elevated temperature, wherein hydrogen peroxide is added to the reaction in the amount of 0.2-1.3% of the PVA weight.

Such modified polyvinyl alcohol is intended to be used as a binding agent for production of paper, which means its use in the form of aqueous solution, i.e. in the same form, in which it was obtained. Thus, the product described in the US patent Nº3859269 - a modified PVA solution - cannot be considered as a material suitable for the purposes of the present invention. Even if such product is evaporated to a solid state, the obtained material would not be quite melt-processable, because of the presence of copper ions, which catalyze the thermal-oxidation processes with participation of oxygen, leading to formation of cross-linked products manifesting as "fish eyes", gels, black scales or other defects unacceptable for extruded articles.

An object of the present invention is to provide a modified polyvinyl alcohol in the solid state suitable for melt extrusion, including a stage of oxidation of polyvinyl alcohol by a peroxide compound in the absence of added metallic catalysts. The use of the obtained modified polyvinyl alcohol as a component of a synthetic casing (film) should raise the degree of transparency of the casing and reduce its opalescence, in other words should improve the optical properties of the casing.

Here and further in this description, unless otherwise mentioned, the sign «%» shall mean the mass percentage of the total mass of the composition or blend. Also, the words with a prefix in round brackets shall denote both the term expressed by the word with that prefix, and the term expressed by the word without that prefix. For example, the word (co)polyamide means both polyamide (homopolymer) and copolyamide.

### Summary of the invention

### Description of the invented modified polyvinyl alcohol

The object of the invention is achieved as follows: modified polyvinyl alcohol in the solid state is obtained by treatment at a temperature of 45-100°C of solid polyvinyl alcohol having a degree of hydrolysis from 70 to 98 mole % and viscosity of 4% aqueous solution of 3-30 cPs, with concentrated aqueous solution of an inorganic peroxide compound selected from the group comprising sodium peroxide, potassium peroxide, calcium peroxide, hydrogen peroxide, or mixtures thereof in the amount equivalent to 0.05 - 3.0% of pure hydrogen peroxide taken from the weight of polyvinyl alcohol.

The initial polyvinyl alcohol can be used in the form of powder, pellets, flakes or other free-flowing solid material.

Preferable temperature of the process is in the range of 60 to 90°C.

This method can be performed at least in one industrial mixer for dry or highly viscous materials equipped with a high speed mixing blades.

The most preferable of these is hydrogen peroxide that is transformed during red-ox reactions into the only product the water. The most practical form of hydrogen peroxide is its commercial concentrated aqueous solution, having about 36-40% H₂O₂. Metallic peroxides can be added to the PVA in small amounts in mixtures with 36-40% aqueous solution of H₂O₂ to increase the concentration of the peroxide ion, but mainly in order to create an alkaline medium, which, according to scientific literature, promotes oxidation of PVA (see, for instance, M.E. Rosenberg. Polymers based on vinylacetate. Leningrad: Chemistry, 1983, page 123).

Besides metallic peroxides, an alkaline medium can be created by adding of alkalizing additives, preferably directly into the commercial H₂O₂ solution, before its addition to the PVA, including, but not limited to, caustic alkalis or salts of alkaline or alkaline-earth metals and weak inorganic acids, such as carbonic acid, phosphoric acid, silicic acid, or hard-to-oxidize carboxylic fatty acids, including, but not limited to, acetic, propionic, butyric, lauric, palmitic and stearic acid.

Quite surprisingly, this essentially solid state reaction between a dry organic substance and a concentrated oxidant runs in a rather controlled manner and yields a homogeneous product.

If the treatment of PVA is performed with a concentrated solution comprising the inorganic peroxide compound in amounts which is equivalent to amounts of neat hydrogen peroxide less than 0.05% of the PVA weight, the resulting product being used as a component of a synthetic casing, does not improve its transparency or reduce its opalescence.

If the treatment of PVA is carried out with a concentrated solution comprising the inorganic peroxide compound in amounts which is equivalent to amounts of neat hydrogen peroxide more than 3.0% of the PVA weight, it leads to an uncontrolled PVA oxidation.

Modified polyvinyl alcohol can be transformed into a form convenient for the following extrusion, by addition of a suitable plasticizer and subsequent operations of molding.

Any of the following generally non-volatile compound selected from the group consisting of glycerol, 1.2-propyleneglycol, pentaerythritol, trimethylolpropane, sorbitol, xylitol, inositol, mannitol, triethanolamine, and polyethyleneglycol with a molecular weight of 200 to 10,000 amu (dalton), and mixtures thereof can be used as a plasticizer.

This plasticizer should be added to the modified PVA, preferably in such an amount as to bring its percentage in the mixture up to 5-20%.

Depending on the chemical nature and physical state of the plasticizer(s), it (they) should be added to the modified PVA at a temperature of 15-100°C during a period of time sufficient to remove the most of water contained in the modified PVA. The preferable variant of the process is mixing of PVA and plasticizer(s) at a reduced pressure and in the presence of water.

The plasticizer can be added directly into the same mixer for dry and highly viscous materials that is used to produce solid-state modified PVA, preferably in the form of powder, without prior unloading out of the mixer.

In other embodiments of the present invention, the plasticizer can be added to the modified PVA after its unloading or at the stage of pelletizing.

The exact type of plasticizer(s) and its (their) content in the blend are chosen taking into account that the modified PVA (hereinafter referred to as agglomerated PVA) should be, firstly, thermoplastic, and, secondly, not sticky at room temperature.

Subject to the proper selection of the extrusion equipment, the modified PVA, as well as the agglomerated modified PVA, can be directly used for production of single- or multilayer water vapor- and smoke-permeable synthetic food casings.

The modified PVA either with or without plasticizer can be transformed into forms more convenient for extrusion (pellets or tablets), also suitable for loading into traditional single-screw extruders for (co)extrusion of food casings.

Modified PVA in the form of tablets is obtained by press forming of (agglomerated) modified PVA containing a plasticizer heated to a temperature, at which it does not fully melt, but only becomes soft and sticky. If necessary, such tablets can be subjected to drying.

Modified PVA in the form of pellets is obtained by melting of agglomerated modified PVA or powdered modified PVA, to which a plasticizer is added in the extruder, at a temperatures of 150 to 220°C. Extrusion of this melt, preferably in the form of rods, followed by their cooling (generally by air), and cutting into separate pellets.

In some embodiments, for instance, in order to improve homogeneity of the food film composition according to the present invention, it is preferable that such pellets contain another thermoplastic resin, preferably in the percentage of 5 to 40%, which is achieved by addition of the above resin to the agglomerated modified PVA in the required amounts.

The above thermoplastic resin can comprise, but not limited to thermoplastic starch, thermoplastic polyvinylpyrrolidone, polyamide, block copolymers of polyamide and polyether, block copolymers of polyurethane and polyether, block copolymers polyester and polyether, or blends thereof.

Extrusion of the melt can be performed through a single- or twin-screw pelletizing extruder, or in a multiple screw extruder. In the preferable variant, the extruder has a vacuum degassing zone, where residual water and other volatiles present or forming in the melt are removed.

### Description of method of PVA modification

The method of preparation of modified PVA generally consists of the following.

The initial commercial polyvinyl alcohol with a degree of hydrolysis from 70 to 98 mole % and 3-30 cPs viscosity of the 4% aqueous solution is mixed, while stirring, with an inorganic peroxide compound or a blend of peroxide compounds or a mixture of a peroxide compound and alkalizing additives in the form of a concentrated aqueous solution in the amounts equivalent to 0.05-3.0% (taken from the PVA weight) of neat hydrogen peroxide, resulting in a dry by touch reaction mixture. Then the temperature is raised, preferably to 60-90°C, and the mixture is stirred at this temperature until the peroxide presence test is negative. After that, unless resulting material is intended to be further processed in the same mixer, the temperature of the mixture is reduced to room temperature and stirring is ceased. The solid product prepared as a result of this modification is free-flowing and dry by touch modified PVA powder. Since the operations following the PVA modification comprise the introduction of easy oxidizable substances into the PVA oxidation product, the added peroxide compounds should be spent during the modification process so completely as possible. Control of completeness of the reaction in respect of peroxides can be effected using any analytical method of determination of peroxides, for instance, by means of such reagent as potassium iodide in acid environment, which in the presence of peroxides is oxidized to iodine and forms with PVA a bright-colored complex, the shade of which (from blue to red-violet) depends on the particular type of PVA. Absence of intensive coloring after addition of acidified KI to a sample of reaction mixture means that the peroxide compound has reacted practically in full. The time required for completion of the modification process is usually from 15 to 90 minutes, depending on the temperature and pH. Under the optimally selected conditions it is of 20 to 60 minutes, and at the most preferable conditions from 30 to 50 minutes. Such rather high PVA oxidation reaction rate in the absence of catalysts, to all appearance, is due to the high concentration of the reagents under the conditions of the invented method.

Modification of PVA can be achieved in a mixer for dry and highly viscous materials equipped with a high-speed mixing blades, or in an aggregate of two or more such mixers.

Such mixer or aggregate can be equipped, if necessary, with an external heating/cooling jacket(s), however, in principle, temperature of the reaction mixture can grow with no external heating, as a consequence of dissipation of the applied mechanical energy. Heating rate in the latter case can be controlled by variation the rotational speed of the mixing blades. Optionally, the mixer can be equipped with a vacuum pump to create a vacuum, which facilitates removal of the water added or released in the course of the reaction from the mixture.

Examples of such mixers are TRM mixers supplied by PLAS MEC S.r.L. (Italy) or CW-50B/CW-200B vertical mixers supplied by CHIAO WEI MECHANIC Co., LTD., (Taiwan), or aggregate consisting of a type FM or MB turbomixer and a KM universal mixer, all manufactured by Reimelt Henschel MischSysteme GmbH (Germany).

To facilitate the subsequent extrusion of modified PVA, the addition of plasticizers, which reduce the melting temperature and the melt viscosity, is desirable. Adding such plasticizer can be performed in a number of ways and using various devices, including a twin-screw extruder. However the most preferable method implies adding and admixing of the plasticizer(s) to the modified PVA in the same mixer, wherein the modified PVA was prepared.

After the peroxides are completely spent during the reaction used for PVA modification, virtually nonvolatile plasticizers and, optionally, small amounts of water can be added for further modification of PVA. Thus, the stages of oxidative modification and plastification are performed as one continuous process. In another embodiment, these stages are separate: the previously prepared modified PVA powder is again loaded in a mixer, and the plasticizers and, optionally, water are then added, while stirring with mixing blades at a low speed. Then the mixing blades speed is increased, the temperature of the mixture is rapidly brought to 80-100°C, and the mixture of modified PVA and plasticizers is stirred at this temperature during 20-50 minutes. At the stage of stirring of the mixture at an elevated temperature, in any of the embodiments of this invention, most of the water added or released as a result of the reaction can be removed. In such a case, the application of vacuum created by the vacuum pump is preferable. Then the mixing blades rotation speed is reduced and, after the temperature has dropped to room temperature, the mixing is ceased. The product obtained as a result of this operation is, in terms of its physical appearance dry by touch lumps of irregular shape with mean linear dimensions of 1-3 mm, hereinafter referred to as agglomerated modified PVA.

The most convenient and versatile forms of modified PVA suitable, in particular, for loading into traditional single-screw extruders for (co)extrusion of food casings, are pellets or tablets.

Modified PVA in the form of tablets is obtained by loading of agglomerated PVA in the tabletting machine and pressing into tablets. During the tabletting the modified PVA containing a plasticizer is subjected to moderate heating, whereby it does not completely melt, but only becomes soft and sticky, and then pressed in such condition into tablets. Modified PVA in the form of tablets can be subsequently dried to the required moisture content using any suitable commercial dryer.

Modified PVA in the form of pellets is obtained by loading of agglomerated PVA in the extruder, its full melting at a temperature from 150 to 220°C, and extrusion of this melt in the form of rods, followed by their cooling (generally by air) and cutting into separate pellets.

In some cases (for instance, in order to improve homogeneity of the food film composition according to the present invention), such pellets contain preferably from 5 to 40% of another thermoplastic resin, that can be achieved by loading the resin mixed with agglomerated modified PVA in the required ratio into the extruder.

Use of extruders to prepare plasticized polymers and compositions (compounds) is well known in prior art. The pelletizing device can be a single- or twin-screw extruder, or a multiple screw extruder. In the preferable case, the extruder has a vacuum degassing zone, where residual water and other volatiles present or forming in the melt are removed. Examples of such specially designed devices are pelletizing extruders of the series ZSK or STS manufactured by Coperion GmbH (Germany), or STJ- 78/180 twin-screw extruders for polymers not resistant to high temperatures, supplied by Lantai Plastics Machinery Co., LTD., (China).

Thus, the provided modified PVA does not contain any toxic or hard-to-eliminate components, such as salts of heavy metals, which could get into the casing and later migrate into the packaged food products. This modification of PVA does not require any specialty equipment or time- or energy-consuming operations, because it is carried out in the absence of organic solvents and in the presence of minimal amounts of water. The modified PVA can be easily converted into a form convenient for extrusion (pellets, tablets, etc.) and contains only trace amounts of volatile components (such as water added or released during the reaction). The end-product should meet the last condition because it is intended for subsequent melt-extrusion and sharp ebullition of the volatiles while extrudate leaves an extruder can bring about appearance of cavities, voids and integrity damaging in an extruded article (food casing).

### Description of the invented synthetic casing.

The object of the invention is achieved by providing a single- or multilayer water vapor- and smoke-permeable synthetic food casing, comprising at least one layer containing 10 to 95.5% of polyamide material, 4.5 to 50% of modified polyvinyl alcohol, and 0 to 40% of additives.

The polyamide material can be any thermoplastic synthetic (co)polyamide (Nylon), however, in the preferable embodiments it is thermoplastic polyamide or copolyamide selected from the group comprising polyamide 6, polyamide 66, polyamide 46, copolyamide 6/66, copolyamide 46/6, and blends thereof. The additives used can comprise plasticizers, or thermoplastic polymers, or colorants, or pigments, or anti-blocking additives, or blends thereof.

The additives are preferably loaded in the extruder in the form of pellets of thermoplastic resins (if the additive is a resin itself), or resin-based masterbatches, or as ingredients of tabletted or pelletized PVA.

The plasticizers used can comprise glycerol, 1.2- propyleneglycol, pentaerythritol, trimethylolpropane, sorbitol, xylitol, inositol, mannitol, triethanolamine, polyethyleneglycol with a molecular weight of 200 to 10,000 amu, and blends thereof in the preferable amount of 5-20%.

The thermoplastic resin used can comprise thermoplastic starch or thermoplastic polyvinylpyrrolidone, or polyamide, or block copolymers of polyamide and polyether, or block copolymers of polyurethane and polyether, or block copolymers of polyester and polyether, or block copolymers of polyamide, polyester and polyether, and blends thereof in the preferable amount of 2 - 40%.

The colorants, pigments, anti-blocking additives or mixture thereof are preferably used in the total amount of 0.01 to 10%.

Depending on the extrusion equipment used, the hydrophilic component for extrusion and coextrusion of the synthetic food casing according to the present invention can comprise modified polyvinyl alcohol, generally, in any of the above mentioned forms, including powdered and agglomerated modified polyvinyl alcohol. However, if traditional single-screw extruders are used for extrusion of the casing, the preferable forms of raw materials are pellets or tablets containing, in addition to modified PVA, plasticizers and other processing and functional additives.

The synthetic food casing according to the present invention can comprise a single or multiple layers. The preferable total number of layers is from 1 to 7.

A multilayer casing can have only two or more layers containing modified PVA. Such multilayer construction can, for instance, improve evenness of mechanical properties distribution along the casing length, because a multilayer embodiment smoothens out the variations in the general composition of the casing in different parts of its area. Typically, satisfactory homogeneity is achieved in casings with at least 3 such layers.

Besides a layer or layers containing modified PVA, the food casing can comprise layers of other compositions. To keep such casing water vapor- and smoke-permeable, these layers, too, must have sufficiently high water vapor- and smoke permeability. As it is known from the prior art such properties are demonstrated, for example, by films made according to the Russian Patent N_{º}2182107 and containing blends of PA 6 or PA 6/66 with such hydrophilic polymers as, for instance, polyvinylpyrrolidone (PVP) or polyalkyloxazoline. The use of a layer consisting of a blend of polyamide with PVP in a multilayer casing can be especially advantageous, when control of the casing adhesion to sausage meat is desirable. The above blends, in contrast to blends of the same polyamides with polyvinyl alcohol not modified according to the present invention, can be extruded as transparent films.

Water vapor- and/or smoke-permeable films, which mainly comprise so-called breathable thermoplastic elastomers, including, but not limited to, block copolymers of polyamide and polyether, block copolymers of polyurethane and polyether, block copolymers of polyester and polyether, and block copolymers of polyamide, polyester and polyether are also known from the prior art. Extrudable grades of these resins can be used as raw material for layer(s) of the synthetic food casing according to the present invention both in their neat commercial form and in blend with other polymeric materials.

For the films known from the prior art the percentage of polyamide in such blends is high; otherwise the films made of them would be too mechanically weak, because of low mechanical strength typical for above block copolymers, and they cannot be used as, for instance, sausage casings. For a casing according to the present invention, wherein the above breathable block copolymers are used as a raw material for separate layers, there is no need to maintain such proportion, and their percentage in a layer can reach, in particular, 50-100%, since an acceptable level of the mechanical characteristics of the film in toto can be provided by other layers. Besides polyamides, such layers can comprise other resins such as thermoplastic starch.

Thus, the layers can comprise:
- (co)polyamides selected from the group consisting of polyamide 6, polyamide 66, polyamide 46, copolyamide 6/66, copolyamide 46/6, and blends thereof,
- breathable thermoplastic elastomers, selected from the group consisting of block copolymers of polyamide and polyether, block copolymers of polyurethane and polyether, block copolymers of polyester and polyether and block- copolymers of polyamide, polyester and polyether,

- water soluble polymers selected from the group consisting of polyvinylpyrrolidone, polyalkyloxazolines, water soluble cellulose ethers or esters, starch,
- and any blends of the above polymers.

Breathable block copolymers of the PEBA type are commercially available, from e.g., Arkema Inc. under as Pebax®. As far as we know, the block copolymers of polyamide, polyester and polyether developed by DuPont de Nemours (WO 02082913) have not been yet commercialized. Breathable block copolymers of polyester and polyether are commercially available by DuPont de Nemours under the Hytrel® trademark, and by DSM Engineering as Arnitel®.

Breathable thermoplastic polyurethanes (BTU) with polyether blocks are commercially available by, e.g., Lubrizol Co. as Estane®.

Any of the above layers can be on one of the external surfaces (a tubular casing has two dissimilar surfaces: the outer and the inner surfaces of the tube) or in the core of the casing. In the case wherein at least one of the external surfaces contains breathable block copolymers with the melting temperature of about 150-180°C, such as block copolymers of polyamide and polyether, such film can be used in the flat (not tubular) form for filling with sausage meat on FFS packaging machines of either vertical or horizontal type. Depending on whether the low melting point block copolymers are present on only one or both surfaces, the packaging can be sealed by means of either butt or overlap sealing.

In addition, any of the above layers can comprise colorants, pigments, plasticizers, anti-blocking additives, etc., in the total amount from 0.01 to 10%.

The casing according to the present invention can be made both in the tubular form, and as flat film. Besides, the tubular casing can be shirred into a compact sticks or strands. It can also be made as a tube of cylindrical or spiral shape.

The total thickness of the casing according to the present invention can be from 15 to 60 µm, in the preferable embodiment from 18 to 40 µm, and in the most preferable embodiment from 18 to 30 µm.

The total thickness of the layers containing modified PVA obtained in accordance with the method disclosed in the present invention generally can be from 20 to 100% of the total thickness of the casing.

The casing according to the present invention has improved optical properties compared with casings obtained with the use of unmodified PVA as a hydrophilic component, which, as was mentioned above, acquire a strong opalescence or pearlescence at humidification, becoming virtually opaque. This is apparently due to the fact that the dispersed phase of the hydrophilic compound present in the casing absorbs moisture more than the polyamide matrix, which results in greater difference in the refractive indices of these phases. It is known that pearlescence in films occurs when the film body contains optical heterogeneities in the form of flattened particles or domains with a thickness approximately corresponding to the visible light wavelength, i.e. 0.390 - 0.750 µm, and when such flattened particles or domains are predominantly oriented lengthwise in the film plane. Special pigments with such designed geometrical parameters can be used to create pearlescent coatings, while in mother-of-pearl itself this effect is due to the flat crystals of aragonite with a thickness of about 0.5 µm. A similar appearance is characteristic of the hydrophilic phase domains in casings produced in accordance with the Russian Federation Patent N_{º}2182107. If, for any reason, the thickness of the domains decreases, which apparently occurs in the use of modified PVA, this leads to a significant reduction of opalescence.

Following description demonstrates some possible embodiments of the present invention. The shown examples have only illustrative character and they unconditionally do not cover the total scope and spirit of the present invention, disclosed by its claims.

### Embodiments of the invention.

### Test methods.

### 1. Qualitative test for presence of peroxides.

0.5 g of the tested material (modified PVA taken from the mixer) are added to a test tube containing 5 ml of 10% solution of potassium iodide acidified with sulfuric acid to pH 1. Red-violet coloring of the solution means that a peroxide is present.

### 2. Visual assessment of the appearance and transparency of the casing.

Assessment is carried out by a group consisting of 10 experts, who take a consensus decision regarding the appearance of the casing on a freshly prepared product (boiled frankfurter). Then each expert assesses, independently of the others, the degree of transparency according to the scale wherein the score «0» means ideal visual transparency, and the score «10» means complete opacity, after which the mean assessment value is calculated.

### 3. Electron microscopy determination of presence of a separate PVA phase in the casing.

Determination of presence of a separate PVA phase in the casing was performed by means of transmission electron microscopy, as described in the Russian Federation Patent N_{º}2182107, on a microcut of the casing with a thickness of 0.1 µm, which resided for a few seconds, after cutting of the film, in a trap containing an aqueous solution of alcohol, with the resultant wash-out of the water-soluble components that makes visible in the electron microscope their phase domains as voids.

### 4. Assessment of smoking effects

Assessment is carried out by 10 experts, who individually assess the smoking effects in samples of peeled frankfurters (their smoking flavor and color of their own smoked skin) achieved during the treatment of the frankfurters in different casings under the same smoking conditions. The scale of the assessment is chosen so, that the score «0» corresponds to the effect achieved for frankfurters in the commercially available NOJAX® cellulose casing supplied by Viskase Co. (Darien, Illinois, USA), with the same diameter and thickness as the tested casings, while the score «10» corresponds to the effect achieved with the use of a PA 6/66 casing without any additives (comparative example 5C). Then the mean score value is calculated.

### 5. Assessment of the proportion of weight loss in the process of cooking of frankfurters

Weight loss in the production of frankfurters occurs primarily at the stage of smoking / roasting / drying (65-75°C, total time about 50 minutes) due to evaporation of the water through vapor-permeable casings. Thus, this parameter characterizes the ability of a casing to transmit water vapor under the actual conditions of the sausage product preparation process.

Weight loss (kg) is calculated as the difference between the weight of a link of frankfurters after stuffing and the weight of the same link after final cooking. Weight loss proportion is the ratio of the weight loss to the weight of the link of frankfurters after stuffing, expressed as a percentage.

### 6. Assessment of peelability on automatic peelers.

Frankfurters in the form of links weighing 12 kg in cooked different tested casings, after the complete production cycle, including boiling and smoking, were peeled on an automatic peeler Model 2600 made by Townsend. If there were no problems with the peeling, the casing was given the assessment mark «1», and if peeling was impossible, the assessment mark «3».

The results of the tests performed by the methods 2-6 are reported in the Table.

The following examples disclose the preferable embodiments of the invention.

### Production of modified polyvinyl alcohol powder.

### Example 1a.

60 kg of polyvinyl alcohol, grade BC-05 supplied by Chang Chun Petrochemical Co. LTD., Taipei, Taiwan (degree of hydrolysis 75 mole %, viscosity of 4% aqueous solution - 5.2 cPs) are loaded in a CW-200 E-400L mixer equipped with a mixing blades with variable rotational speed, and with a heating/cooling jacket. Hot water at the temperature of 60°C is supplied to the jacket, and mixing is started at a low speed (150 rpm). Mixing is continued for 15 minutes, during which process the temperature of polyvinyl alcohol increases to 45°C. Then 900g of 38% aqueous solution of H₂O₂ (commercial hydrogen peroxide of the food grade), in which 180 g of sodium acetate (X4, Sigma-Aldrich) are additionally dissolved, are added, during 3 minutes, through the charging door of the mixer, at a low speed of the mixing blades. That is, the total amount of the peroxide in neat hydrogen peroxide equivalent is 0.57% of the weight of the initial polyvinyl alcohol. Further the blend is mixed at a low speed of the mixing blades for 5 more minutes. At the end of this stage of processing, the blend temperature is 38°C. Then the speed of the mixing blades is increased to 185 rpm and the blend is mixed for 20 more minutes. During the first 10 minutes the blend temperature grows up to 65°C, and in the subsequent 10 minutes to 75°C due to the simultaneous external heating and internal friction. In the course of the heating, samples of the blend are regularly taken from the mixer and tested for presence of residual peroxide. At the end of this period, the peroxide test of the samples becomes negative. Then the speed of the mixing blades is reduced to 150 rpm, and cold water at the temperature of 15°C is supplied to the jacket, and the blend is mixed under these conditions during 20 minutes. During this time the temperature of the mixtures drops to 30°C, after which the mixing is stopped and the dry by touch powder product is unloaded.

### Example 1b.

Modification of polyvinyl alcohol is carried out in the same way as in the example 1a, except that the PVA is treated with a blend of 1,650 g of 38% aqueous solution of H₂O₂ (commercial hydrogen peroxide of the food grade) and 44g of sodium peroxide (X4, Sigma-Aldrich) dissolved therein. In this case the total amount of peroxide for the same weight of PVA is 2 times greater, than in example 1a. That is, the total amount of peroxides is 1.14% of the weight of the initial polyvinyl alcohol in neat hydrogen peroxide equivalent. Besides, the time required for this method of modification, i.e. until complete consumption of the peroxide in this example is 5 minutes longer, than in example 1a. The dry by touch powder product is then unloaded.

### Example 1c.

Modification of polyvinyl alcohol is carried out according to the example 1b, except that the PVA used has the degree of hydrolysis 86 mole %, 29.5 cPs viscosity of 4% aqueous solution (BP-20 of the same manufacturer). The process of modification lasts for approximately the same time as in example 1a. The dry by touch powder product is then unloaded.

### Production of agglomerated modified polyvinyl alcohol.

### Example 2a.

Modified polyvinyl alcohol is prepared in the same way as in example 1a until the time when the test for presence of residual peroxide becomes negative. After that, a mixture of 7 kg of glycerol and 0.5 kg of liquid polyethyleneglycol (MW≈400) is added to the blend at the same temperature of 75°C and the mixing blades speed of 180 rpm. That is, the total amount of the plasticizer is 12.5%. Further the blend is mixed for 10 minutes, while the temperature rises up to 90°C. Then the mixing blades speed is reduced to 150 rpm, and cold water at the temperature of 15°C is supplied to the jacket, and the blend is mixed again during 20 minutes. Over this time the blend temperature drops to 30°C, after that the mixing is stopped and the produced agglomerated modified polyvinyl alcohol is unloaded from the mixer.

Agglomerated modified PVA, in terms of its physical appearance, is obtained in the form of loose non-tacky dry by touch lumps of irregular shape with a mean linear size of 0.5-1.5 mm.

Its residual water content is 1.5%.

### Example 2b.

The same mixer (example la) is used for loading of modified PVA powder produced, according to example 1a, two days before that, and 3.5 kg of glycerol are gradually added during 3 minutes, while stirring through the charging door at the mixing blades speed of 150 rpm. Thus, the percentage of the plasticizer is 5% of the blend weight. Then the blend is mixed at the same speed of the mixing blades for 10 more minutes. After that, the mixing blades speed is increased to 185 rpm, while simultaneously creating a vacuum of 2-4 Torr (mm Hg) by means of a connected vacuum pump, and the blend is mixed for 20 minutes. During the first 10 minutes the temperature rises from 25 to 80°C, and in the subsequent 10 minutes to 90°C. Further operations shall be performed in the same way as in example 2a. The resulting product is a bulk of lumps of irregular shape with a mean linear size of 0.5-1.5 mm.

The residual water content in the resulting product is 1%.

### Example 2c.

Agglomerated modified polyvinyl alcohol is performed in the same way as in example 2a, with the exception that the product obtained according to example 1b is used as the modified PVA powder. Besides, the duration of the last stage of heating with simultaneous vacuuming is increased to 25 minutes.

The residual water content in such agglomerated product is 0.3%.

### Example 2d.

Production of agglomerated modified polyvinyl alcohol is performed in the same way as in example 2b, with the exception that the product obtained according to example 1c is used as the modified PVA powder.

The residual water content in the resulting product is 0.9%.

### Production of tabletted modified polyvinyl alcohol.

### Example 3a.

Agglomerated modified polyvinyl alcohol produced in accordance with example 2a is loaded in the hopper of a RTP 30 tabletting machine manufactured by NPK NATA (Mariupol, Ukraine) and press-molded at the temperature of 160°C into cylindrical tablets with the diameter of 7 mm and height of 2 mm, which are then cooled by air flow. The resulting tablets of modified polyvinyl alcohol are then dried during 4 hours in a vacuum furnace at the vacuum of 0.1 Torr and 110°C until the moisture content is 0.1 %.

### Example 3b.

Production of tabletted modified polyvinyl alcohol is achieved in the same way as in example 3a, with the exception that agglomerated modified PVA obtained in accordance with example 2c is loaded in the hopper of the tabletting machine.

### Example 3c.

Tablets of modified polyvinyl alcohol are produced in accordance with example 3a, with the exception that the agglomerated modified PVA used for tabletting is obtained as indicated in example 2d.

### Production of pelletized modified polyvinyl alcohol.

### Example 4a.

Agglomerated modified polyvinyl alcohol obtained as example 2a is loaded into the hopper of a STJ-78/180 twin-screw extruder manufactured by Lantai Plastics Machinery Co., LTD., (China) and equipped with a vacuum pump at the degassing zone, melted and extruded in the form of rods, which are then cooled in a flow of cold air and cut into separate cylindrical pellets with a diameter of 2mm and height of 1 mm. Temperature profile of the extruder: zones 1-2: 150°C, zones 3-9: 160°C, the vacuum pump creates the vacuum of 0.1 Torr, in Zone 7.

Moisture content of the obtained pellets is 0.2%.

### Example 4b.

Production of pelletized modified polyvinyl alcohol is achieved as per example 4a, with the exception that the material loaded in the hopper of the extruder is a blend of 60% of agglomerated modified PVA obtained according to example 2a, and 40% of pelletized polyether block amide (Pebax® MH1657 supplied by Archema).

Moisture content of the obtained pellets is 0.40%.

### Monolayer casings containing modified PVA.

### Example 5a.

A blend consisting of 35% of tabletted modified PVA obtained according to example 3a, and 65% of PA 6/66 (Ultramid C33 supplied by BASF SE, Germany) is loaded into the hopper of a single-screw extruder (manufactured by Ankele Kunststoffmaschinenbau GbR, Germany) with the screw diameter of 45 mm and length of 1,125 mm, melted and mixed. The melt extrudate leaves an annular die in the form of a cast tubular film stock, which is quenched with cold water to a temperature of 13-15°C. The resulting solidified primary tube has the mean thickness of 128 µm and the mean diameter of 7.5 mm. A system of rolls is used to pass the flattened primary tube into the operative zone of a flat panel IR heater and heat it up to the temperature of 80°C, with subsequent transfer to the stretching zone, where the primary tube is subjected to stretching in the machine and transverse directions with the factors of 2.7 and 3.6 respectively, using the blown-in air under a excess pressure of about 2 atm, and two pairs of active nip rolls that hold the air in the bubble and rotate at different speeds. The resulting biaxially stretched tube in the form of a loosely blown bubble is passed into the operative zone of the tubular IR heater, where it is heated up to 150°C and held at this temperature for 5 seconds. At this stage, known as thermofixation, the film is simultaneously subjected to shrinking by 15% in the machine direction, and by 23% in the transverse direction. The resulting monolayer tubular casing with the mean diameter of 22 mm and the mean thickness of 20 µm is suitable for use as a casing for frankfurters.

Characteristics of this and other casings relating to the objects of the present invention are shown in the Table.

### Example 5b.

Monolayer casing is prepared in the same way as in example 5a, but with the use of tabletted modified PVA obtained according to example 3b.

### Example 5c.

Monolayer casing is prepared in the same way as in example 5a, but with the use of tabletted modified PVA obtained according to example 3c.

### Example 5d.

Monolayer casing is prepared according to example 5a, but the extruder is loaded with the following mixture of pellets: 35% of PA 6/66 (Ultramid C33 supplied by BASF SE, Germany), and 65% of pelletized modified PVA in the same way as in example 4b.

### Comparative examples of monolayer casings.

### Comparative example 5A.

Monolayer casing is prepared according to example 5a, except that for its production unmodified PVA with the degree of hydrolysis 75% and 5 cPs viscosity of 4% aqueous solution (BC-05 supplied by Chang Chun Petrochemical Co., LTD., Taipei, Taiwan), which is subjected to preliminary agglomeration and tabletting in the same way as in examples 2a and 3a is used instead of modified PVA.

### Comparative example 5B.

Monolayer casing is prepared according to example 5a, except that for its production, unmodified PVA with the degree of hydrolysis 86% and 29.5 cPs viscosity of 4% aqueous solution (BC-20 supplied by Chang Chun Petrochemical Co., LTD., Taipei, Taiwan), which is subjected to preliminary agglomeration and tabletting in the same way as in example s 2a and 3a is used instead of modified PVA.

### Comparative example 5C.

Monolayer casing is prepared according to example 5a, however, using neat PA 6/66 under the Ultramid® C33 supplied by BASF SE, Germany.

### Multilayer casings containing modified PVA.

### Example 6a.

Polymer feedstock, the composition of which is described in example 5a, is loaded into hoppers of two extruders of equal productive capacity, that constitute a two-layer extrusion machine, wherein the feedstock is melted and mixed. The melt is then transferred into the two-layer extrusion head, wherein the melt is formed into two-layer extrudate, which leaves the annular die as a tubular film stock, which is then quenched with cold water to a temperature of 13- 15°C. The resulting solidified primary tube has the mean thickness of 128 µm and the mean diameter of 7.5 mm. Subsequent operations will be performed in accordance with the process described in example 5a. The product is a tubular casing with the mean diameter of 22 mm and the mean thickness of 20 µm coextruded using two equally thick layers of the same composition.

### Example 6b.

Three extruders (A, B and C) operating at the relative capacities of A:B:C = 1:3:1 and constituting a three-layer extrusion unit are loaded with feed stock of the following composition:
A and C: block copolymers of polyamide and polyether (Pebax 3000 MV supplied by Arkema Inc.);
B: polymeric feed stock in the same way as in example 5a to produce a monolayer casing.

In all three extruders the above feed stock was melted and, where necessary, mixed to obtain homogeneous melts. Then the melts is transferred into the three-layer extrusion head to form a three-layer extrudate, which then leaves the annular die as a three-layer tubular film, wherein the inner layer is made of the material from extruder A, the core layer is made of the material from extruder B, and the outer layer is made of the material from extruder C. Further operations were performed according to the process described in example 5a. The prepared tubular casing has the same geometrical parameters, but comprises three layers with the approximate thickness ratios of 1:3:1 (with a minor adjustment for the insignificant difference in densities of the layer's polymeric compositions).

The following Table contains characteristics of the prepared casings.

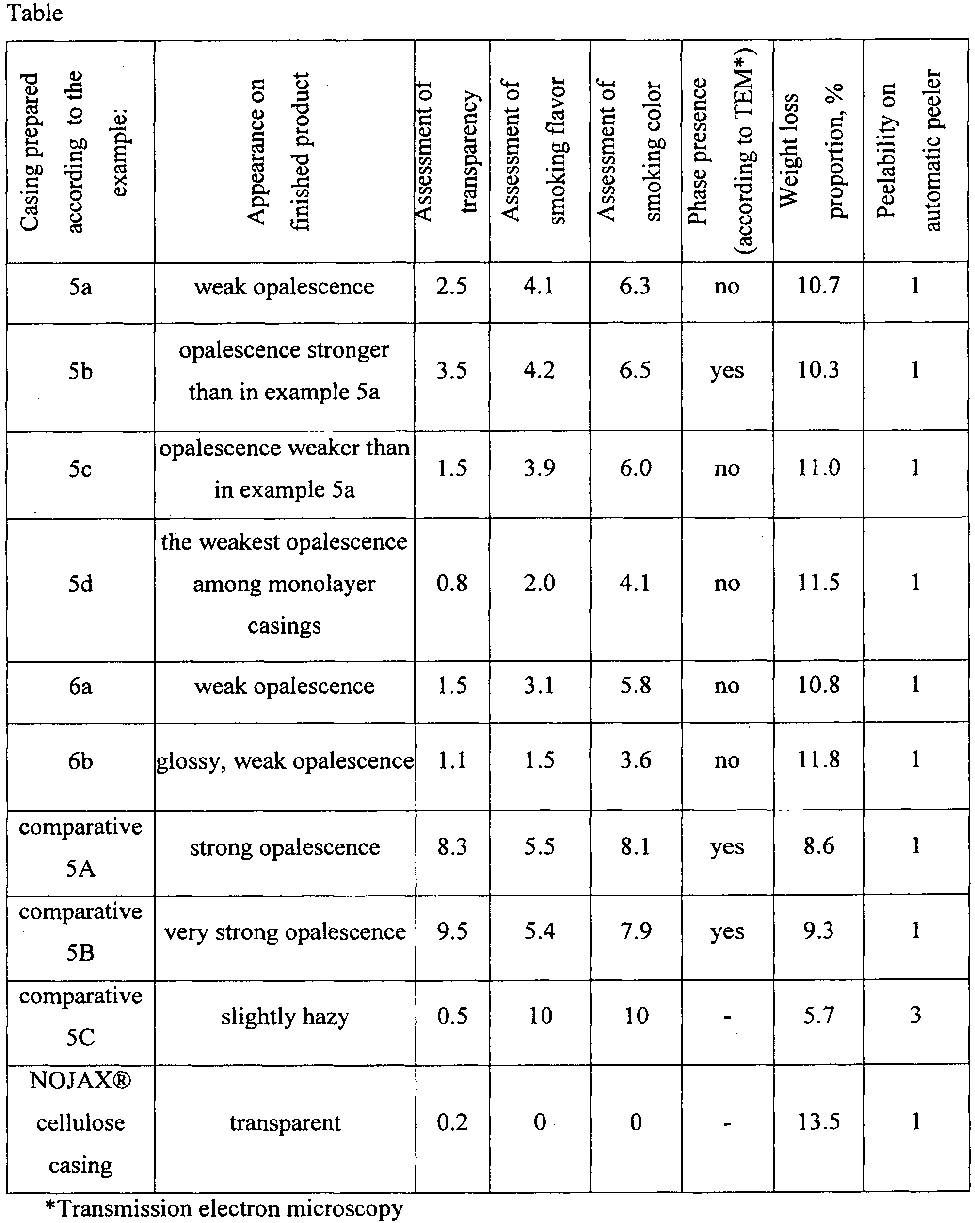

As can be seen from the above data, the casings made in accordance with this invention are more transparent and display a weaker opalescence compared with the casings obtained with the use of unmodified polyvinyl alcohol. The proposed casings preserve a high level of smoke permeability (see assessment of smoking flavor and color) and peelability on automatic plant (peelers), as well as a low adhesion to the stuffing. Peelability of such casings for frankfurters is comparable to cellulose casings traditionally peeled on automatic equipment. For this reason they are especially suitable for use as casings for frankfurters.

Surprisingly, despite the fact that all casings according to the present invention exhibit visible, though significantly attenuated signs of the presence of the highly dispersed PVA phase in (co)polyamide expressed by opalescence, i.e. dispersion of light on this phase domains of certain shapes and thicknesses, the casings prepared in accordance with examples 5a, 5c, 5d, 6a and 6b do not show any presence of the hydrophilic phase domains at examination by means of a transmission electron microscope. We do not intend to put forward any theory, but believe it expedient to assume that this phenomenon can be accounted for by the fact that PVA combines, through the aldehyde groups, which, as is known, PVA acquires as a result of treatment with oxidants, with amino groups of polyamide and so becomes insoluble in water. Therefore it cannot be washed out when the microcuts get into water, and its domains are not found by electron microscope examination.

In such a way, casings with improved optical properties have been obtained, which not only preserve the advantageous properties of known smokeable polyamide-based casings, but are also superior to the latter in terms of smokeability, and thus the objects of the present invention have been achieved.

## Claims

1. A modified polyvinyl alcohol, **characterized in that** it is produced by a method comprising a stage of treatment of solid state polyvinyl alcohol having the degree of hydrolysis from 70 to 98 mole % and 3-30 cPs viscosity of 4% aqueous solution with concentrated aqueous solution of an inorganic peroxide compound selected from the group comprising sodium peroxide, potassium peroxide, calcium peroxide, hydrogen peroxide, or mixtures thereof in the amount of 0.05-3.0% of the polyvinyl alcohol weight in neat hydrogen peroxide equivalent at a temperature of 45-100°C.

2. The modified polyvinyl alcohol according to claim 1, wherein the polyvinyl alcohol is used in the form of powder, small pellets, flakes or such other free-flowing solid material.

3. The modified polyvinyl alcohol according to claim 1, the method for production of which comprises an additional stage of introduction of 5-20% plasticizer selected from the group comprising glycerol, 1.2-propyleneglycol, pentaerythritol, trimethylolpropane, sorbitol, xylitol, inositol, mannitol, triethanolamine, polyethylene glycol with a molecular weight from 200 to 10,000 amu, and blends thereof into the modified polyvinyl alcohol.

4. The modified polyvinyl alcohol according to claim 3, the method for production of which comprises an additional stage of pressing of the modified polyvinyl alcohol into tablets.

5. The modified polyvinyl alcohol according to claim 3, the method for production of which comprises an additional stage of extrusion pelleting of the plasticizer-containing modified polyvinyl alcohol or of its blend with 5-40% of another thermoplastic resin selected from the group comprising thermoplastic starch, thermoplastic polyvinylpyrrolidone, polyamide, block copolymers of polyamide and polyether, block copolymers of polyurethane and polyether, block copolymers of polyester and polyether, and blends thereof at a temperature from 150 to 220°C.

6. A water vapor- and smoke-permeable synthetic food casing, **characterized in that** it comprises one or more layers, which comprise at least one layer comprising from 4.5 to 50% of modified polyvinyl alcohol according to claim 1, from 10 to 95.5% of polyamide material, and from 0 to 40% of additives.

7. The water vapor- and smoke-permeable synthetic casing according to claim 6, wherein the polyamide material is a thermoplastic polyamide or copolyamide selected from the group comprising polyamide 6, polyamide 66, polyamide 46, copolyamide 6/66, copolyamide 46/6, and blends thereof.

8. The water vapor- and smoke-permeable synthetic casing according to claim 6, wherein the additives are thermoplastic resins, or plasticizers or colorants, or pigments, or anti-blocking agents, or blends thereof.

9. The water vapor- and smoke-permeable synthetic casing according to claim 8, wherein the thermoplastic resin is selected from the group comprising thermoplastic starch, thermoplastic polyvinylpyrrolidone, block copolymers of polyamide and polyether, block copolymers of polyurethane and polyether, block copolymers of polyester and polyether, block copolymers of polyamide, polyester and polyether, and blends thereof, in the preferable amount of 2-40%.

10. The water vapor- and smoke-permeable synthetic casing according to claim 6, which comprises from 1 to 7 layers.

11. The water vapor- and smoke-permeable synthetic casing according to claim 6, which comprises from 1 to 3 layers containing modified polyvinyl alcohol obtained according to claim 1.

12. The water vapor- and smoke-permeable synthetic casing according to claim 10, which comprises layers not containing modified polyvinyl alcohol, in the preferable amount from 1 to 6.

13. The water vapor- and smoke-permeable synthetic casing according to claim 12, wherein the layers contain polymers selected from the group consisting of
- (co)polyamides,
- breathable thermoplastic elastomers selected from the group comprising block copolymers of polyamide and polyether, block copolymers of polyurethane and polyether, block copolymers of polyester and polyether, block copolymers of polyamide, polyester and polyether,
- water-soluble polymers selected from the group comprising polyvinylpyrrolidone, polyalkyloxazolines, water-soluble cellulose ethers and esters, thermoplastic starch,
and any blends of the above polymers.

14. The water vapor- and smoke-permeable synthetic casing according to claim 6, wherein the casing thickness is from 15 to 60 µm, in the preferable embodiment from 18 to 40 µm, and in the most preferable embodiment from 18 to 30 µm.

15. The water vapor- and smoke-permeable synthetic casing according to claim 6, wherein the total thickness of the layers containing modified polyvinyl alcohol is from 20 to 100% of the total thickness of the casing.

## Patentansprüche

1. Modifizierter Polyvinylalkohol, dessen Herstellungsmethode umfasst die Behandlung des Polyvinylalkohols im festen Zustand mit einem Hydrolysegrad von 70 bis 98 Mol-% und Viskosität von 3 bis 30 sPs in 4%iger wäßrigen Lösung, durch konzentrierter wäßriger Lösung von anorganischer Peroxidverbindung, die aus der Gruppe Natriumperoxid, Kaliumperoxid, Kalziumperoxid, Wasserstoffperoxid oder Kombinationen davon gewählt ist, in einer Menge von zwischen 0,05 und 3,0 Gew.-% des Polyvinylalkohols, bezogen auf reines Wasserstoffperoxid bei einer Temperatur zwischen 45 und 100°C.

2. Modifizierter Polyvinylalkohol nach Anspruch 1, **dadurch gekennzeichnet, dass** der Polyvinylalkohol ein Pulver, kleine Perlen, Flökchen oder andere Schüttformen ist.

3. Modifizierter Polyvinylalkohol nach Anspruch 1, dessen Herstellungsmethode umfasst eine zusätzliche Phase der Zuführung in den modifizierten Polyvinylalkohol von Plastifizierungsmittel in einer Menge von zwischen 5 und 20%, das aus der Gruppe Glycerin, Propandiol-1,2, Pentaerythrit, Trimethylolpropan, Sorbit, Xylit, Inosit, Mannit, Triäthanolamin, Polyäthylenglykol mit Mol.Gew. von 200 bis 10000 Atomgewichtseinheit, oder Kombinationen davon gewählt ist.

4. Modifizierter Polyvinylalkohol nach Anspruch 3, dessen Herstellungsmethode umfasst eine zusätzliche Phase des Pressverfahrens von dem modifizierten Polyvinylalkohol in die Form von Tabletten.

5. Modifizierter Polyvinylalkohol nach Anspruch 3, dessen Herstellungsmethode umfasst eine zusätzliche Phase der Extrusionsgranulierung des modifizierten Polyvinylalkohols, der Plastifizierungsmittel enthält, oder dessen Kombination, mit 5 bis 40% von anderem thermoplastischen Polymermaterial, das aus der Gruppe thermoplastische Stärke, thermoplastischer Polyvinylpyrrolidon, Polyamid, Blockcopolymere von Polyamid und Polyäther, Blockcopolymere von Polyurethan und Polyäther, Blockcopolymere von Polyester und Polyäther und Kombinationen davon gewählt ist, bei einer Temperatur zwischen 150 und 220°C.

6. Wasserdampf- und Rauchdurchlässige Kunststoffhülle für Lebensmittel, **dadurch gekennzeichnet, dass** sie eine oder mehrere Schichten enthält und mindestens eine Schicht hat, die von 4,5 bis 50% des modifizierten Polyvinylalkohols nach Anspruch 1, von 10 bis 95,5% des Pollyamidmaterials und von 0 bis 40% Zusätzen enthält.

7. Wasserdampf- und Rauchdurchlässige Kunststoffhülle nach Anspruch 6, **dadurch gekennzeichnet, dass** das Polyamidmaterial ein thermoplastisches Polyamid oder Kopolyamid ist, das aus der Gruppe Poyamid-6, Polyamid-66, Polyamid-46, Kopolyamid-6,66 und Kopolyamid-46,6 und Kombinationen davon gewählt ist.

8. Wasserdampf- und Rauchdurchlässiger Kunststoffhülle nach Anspruch 6, **dadurch gekennzeichnet, dass** als Zusätze thermoplastische Polymermaterialien oder Plastifizierungsmittel, oder Farbmittel, oder Pigmente, oder Anti-Blocking-Zusätze, oder Kombinationen davon verwendet werden.

9. Wasserdampf- und Rauchdurchlässige Kunststoffhülle nach Ansruch 8, **dadurch gekennzeichnet, dass** thermoplastisches Polymermaterial aus der Gruppe thermoplastische Stärke, thermoplastischer Polyvinylpyrrolidon, Blockcopolymere von Polyamid und Polyäther, Blockcopolymere von Polyurethan und Polyäther, Blockcopolymere von Polyester und Polyäther, Blockcopolymere von Polyamid, Polyester und Polyäther und Kombinationen davon gewählt ist, mit Vorzugsmenge zwischen 2 und 40%.

10. Wasserdampf- und Rauchdurchlässige Kunststoffhülle nach Anspruch 6, **dadurch gekennzeichnet, dass** sie von 1 bis 7 Schichten enthält.

11. Wasserdampf- und Rauchdurchlässige Kunststoffhülle nach Anspruch 6, **dadurch gekennzeichnet, dass** sie von 1 bis 3 Schichten enthält, die den modifizierten Polyvinylalkohol enthalten, der nach Anspruch 1 hergestellt wird.

12. Wasserdampf- und Rauchdurchlässige Kunststoffhülle nach Anspruch 10, **dadurch gekennzeichnet, dass** sie die Schichten enthält, die den modifizierten Polyvinylalkohol mit Vorzugsmenge von 1 bis 6 nicht enthalten.

13. Wasserdampf- und Rauchdurchlässige Kunststoffhülle nach Anspruch 12, **dadurch gekennzeichnet, dass** die Schichten Polymeren enthalten, die aus der Gruppe:
- (Ko)polyamide,
- atmungsaktive thermoplastische Elastomere, die aus der Gruppe Blockcopolymere von Polyamid und Polyäther, Blockcopolymere von Polyurethan und Polyäther, Blockcopolymere von Polyester und Polyäther, Blockcopolymere von Polyamid, Polyester und Polyäther gewählt sind,
- wasserlösliche Polymere, die aus der Gruppe Polyvinylpyrrolidon, Polyalkyloxazolinen, wasserlösliche Zelluloseäther und Zelluloseester, thermoplastische Stärke gewählt sind,
und beliebige Kombinationen von beliebiger Anzahl der obengenannten Polymere,
gewählt sind.

14. Wasserdampf- und Rauchdurchlässige Kunsthülle nach Anspruch 6, **dadurch gekennzeichnet, dass** die Hüllendicke von 15 bis 60 µm ist, vorzugsweise von 18 bis 40 µm und ganz besonders bevorzugt von 18 bis 30 µm ist.

15. Wasserdampf- und Rauchdurchlässige Kunsthülle nach Anspruch 6, **dadurch gekennzeichnet, dass** die Gesamtschichtdicke, die modifizierten Polyvinylalkohol enthält, von 20 bis 100% der Gesamtdicke der Hülle ist.

## Revendications

1. Alcool polyvinylique modifié, dont le procédé de fabrication comprend un traitement d'un alcool polyvinylique à l'état solide ayant le degré d'hydrolyse entre 70 et 98 pour-cent molaire et la viscosité de la 4% solution aqueuse de 3-30 cPs par une solution aqueuse concentrée d'un composé peroxyde inorganique choisi du groupe comprenant peroxyde de sodium, peroxyde de potassium, peroxyde de calcium, peroxyde d'hydrogène ou leurs mélanges en quantité entre 0.05 et 3.0% par rapport au poids de l'alcool polyvinylique par rapport au composé peroxyde pur à la température de 45 à 100°C.

2. Alcool polyvinylique modifié selon la revendication 1, **caractérisé en ce que** l'alcool polyvinylique représente une poudre, des petites granules, des floches ou d'autres formes pulvérulentes.

3. Alcool polyvinylique modifié selon la revendication 1, dont le procédé de fabrication comprend une étape complémentaire d'introduction d'un plastifiant dans l'alcool polyvinylique modifié en quantité entre 5 et 20%, le plastifiant étant choisi du groupe comprenant glycérine, 1,2-propylène glycol, tetra nitrate de penta-érythrol, triméthylolpropane, sorbite, xylite, inosite, mannite, triéthanolamine, polyéthylène glycol avec le poids moléculaire entre 200 et 10000 unités de poids atomique ainsi que leurs mélanges.

4. Alcool polyvinylique modifié selon la revendication 3, dont le procédé de fabrication comprend une étape complémentaire du pressage de l'alcool polyvinylique modifié en formant des tablettes.

5. Alcool polyvinylique modifié selon la revendication 3, dont le procédé de fabrication comprend une phase complémentaire de la granulation par extrusion d'alcool polyvinylique modifié comprenant un plastifiant ou de son mélange avec un autre matériaux polymériques thermoplastiques choisi du groupe comprenant amidon thermoplastique, polyvinyl pyrrolidone thermoplastique, polyamide, copolymères en bloc de polyamide et de polyéther, copolymères en bloc de polyuréthanne et de polyéther, copolymères en bloc de polyester et de polyéther ainsi que leurs mélanges, à la température entre 150 et 220°C.

6. Coque synthétique perméable à la vapeur et à la fumée pour les produits alimentaires, **caractérisée en ce qu'**elle comprend une ou plusieurs couches et qu'elle comprend au moins une couche comprenant entre 4.5 et 50% de l'alcool polyvinylique modifié selon la revendication 1, entre 10 et 95.5% des matériaux polyamides et entre 0 et 40% des additifs.

7. Coque synthétique perméable à la vapeur et à la fumée selon la revendication 6, **caractérisée en ce que** les matériaux polyamides représentent un polyamide ou un copolyamide choisi du groupe comprenant polyamide 6, polyamide 66, polyamide 46, copolyamide 6,66 et copolyamide 46,6 ainsi que leurs mélanges.

8. Coque synthétique perméable à la vapeur et à la fumée selon la revendication 6, **caractérisée en ce que** les additifs représentent des matériaux polymériques thermoplastiques, ou des plastifiants, ou des colorants, ou des pigments, ou des additifs d'antiblocage, ou leurs mélanges.

9. Coque synthétique perméable à la vapeur et à la fumée selon la revendication 8, **caractérisée en ce que** le matériel polymérique thermoplastique est choisi du groupe comprenant amidon thermoplastique, polyvinyl pyrrolidone thermoplastique, polyamide, copolymères en bloc de polyamide et de polyéther, copolymères en bloc de polyuréthanne et de polyéther, copolymères en bloc de polyester et de polyéther, copolymères en bloc de polyamide, de polyester et de polyéther ainsi que leurs mélanges, en quantité de préférence comprise entre 2 et 40%.

10. Coque synthétique perméable à la vapeur et à la fumée selon la revendication 6, **caractérisée en ce qu'**elle comprend entre 1 et 7 couches.

11. Coque synthétique perméable à la vapeur et à la fumée selon la revendication 6, **caractérisée en ce qu'**elle comprend entre 1 et 3 couches, comprenant l'alcool polyvinylique modifié obtenu selon la revendication 1.

12. Coque synthétique perméable à la vapeur et à la fumée selon la revendication 10, **caractérisée en ce qu'**elle comprend les couches non-comprenant l'alcool polyvinylique modifié en quantité de préférence comprise entre 1 et 6.

13. Coque synthétique perméable à la vapeur et à la fumée selon la revendication 12, **caractérisée en ce qu'**elle comprend les polymères choisis du groupe comprenant
- (co) polyamides,
- élastomères thermoplastiques perméables àl'air choisis du groupe comprenant copolymères en bloc de polyamide et de polyéther, copolymères en bloc de polyuréthanne et de polyéther, copolymères en bloc de polyester et de polyéther, copolymères en bloc de polyamide, de polyester et de polyéther,
- polymères solubles dans l'eau choisis du groupe comprenant polyvinylpyrrolidone, polyalkyloxazolines, polyesters et polyéthers de cellulose solubles dans l'eau, amidon thermoplastique,
ainsi que n'importe quels mélanges de n'importe quel nombre des polymères énumérés ci-dessus.

14. Coque synthétique perméable à la vapeur et à la fumée selon la revendication 6, **caractérisée en ce que** l'épaisseur de la coque est comprise entre 15 et 60 microns, en réalisation préférable entre 18 et 40 microns, en réalisation la plus préférable entre 18 et 30 microns.

15. Coque synthétique perméable à la vapeur et à la fumée selon la revendication 6, **caractérisée en ce que** l'épaisseur totale des couches comprenant l'alcool polyvinylique modifié est entre 20 et 100% de l'épaisseur totale de la coque.
